# EUROPÄISCHE PATENTSCHRIFT

(11) **EP 2 092 030 B1**
(45) Veröffentlichungstag und Bekanntmachung des Hinweises auf die Patenterteilung: **21.04.2010**
(21) Anmeldenummer: 07822351.8
(22) Anmeldetag: 08.11.2007
(51) Int. Cl.: C09D 201/02, C09D 4/00

(54) **NIEDRIGVISKOSE BESCHICHTUNGSMASSEN**
LOW-VISCOSITY COATING COMPOSITIONS
PÂTES DE REVÊTEMENT À BASSE VISCOSITÉ

(30) Priorität: 10.11.2006 EP 06123793
(43) Veröffentlichungstag der Anmeldung: 26.08.2009
(73) Patentinhaber: BASF SE, 67056 Ludwigshafen (DE)
(72) Erfinder: LAFUENTE CERDA, Oscar, 68199 Mannheim (DE); HEISCHKEL, Yvonne, 68199 Mannheim (DE); VETTER, Michael, 67240 Bobenheim-Roxheim (DE); SCHWALM, Reinhold, 67157 Wachenheim (DE); GRUBER, Nick, 68161 Mannheim (DE)
(86) Internationale Anmeldenummer: PCT/EP2007/062047
(87) Internationale Veröffentlichungsnummer: WO 2008/055954

(56) Entgegenhaltungen:
- EP-A- 0 552 795
- EP-A- 0 919 578

## Beschreibung

Die vorliegende Erfindung beschreibt strahlungshärtbare, niedrigviskose Beschichtungsmassen, die (Meth)Acrylate und Adipinsäuredivinylester enthalten.

Für die Lackindustrie werden ständig Beschichtungsmassen mit möglichst niedriger Viskosität gesucht, um eine Applikation möglichst einfach zu gestalten. Dafür werden häufig Lösungsmittel und/oder Reaktivverdünner eingesetzt.

EP 385149 A2 beschreibt photopolymerisierbare Klebstoffzusammensetzungen, die u.a. Epoxyacrylate und Beimischungen von 3,5 -14% einer polyethylenisch ungesättigten Verbindung enthält. Als solche sind innerhalb langer Listen auch Vinylester und Adipinsäuredivinylester erwähnt, jedoch in den Beispielen nicht explizit offenbart (S. 7, Z. 30-42).

Nachteilig an diesen Klebstoffmassen ist, daß sie bei hohen Temperaturen (160 °C für 2 Std., S. 8, Z. 57 - 58) nachgehärtet werden müssen. Bei derartig hohen Temperaturen werden jedoch viele Substrate geschädigt.

EP 552795 A1 beschreibt Gemische aus UV-härtbaren Harzen und Carbonsäurevinylestern, u.a. Adipinsäuredivinylester.

Nachteilig ist, daß die beschriebenen Gemische bei Gehalten an Vinylester von mehr als 20 Gewichtsteilen (bezogen auf 100 Gewichtsteile Harz) nicht vollständig aushärten (S. 3, Z. 30-31).

US 3992276 beschreibt ungesättigte Polyesterharze, die optional polyethylenisch ungesättigte Verbindungen enthalten können. Vinylester werden lediglich innerhalb breiter Listen erwähnt und nicht in den Beispielen explizit offenbart.

US 5254603 beschreibt UV-härtbare Beschichtungsmassen, die ungesättigte Polyesterharze und Divinylester enthalten können. Beispiele mit Adipinsäuredivinylester sind explizit offenbart.

Bei den ungesättigten Polyesterharzen handelt es sich lediglich um solche, die innere Doppelbindungen enthalten, beispielsweise aus Maleinsäure abgeleitet.

US 5086086 beschreibt Beschichtungsmassen, die ethylenisch ungesättigte Monomere enthalten können. Adipinsäuredivinylester ist in breiten Listen aufgeführt, jedoch nicht in den Beispielen explizit offenbart. Weiterhin können Polyurethan-Vorläufer (Polyisocyanate und hydroxygruppentragende Verbindungen) enthalten sein. Diese Polyurethane sind als zweikomponentige Beschichtungsmassen durch Reaktion der Isocyanatgruppen mit den Hydroxygruppen härtbar, tragen jedoch nicht zur Strahlungshärtung bei.

Aufgabe der vorliegenden Erfindung war es, strahlungshärtbare Beschichtungsmassen bereitzustellen, mit denen Acrylate niedrigviskos formuliert werden können und die bei Temperaturen unter 120 °C gehärtet werden können.

Die Aufgabe wurde gelöst durch strahlungshärtbare Beschichtungsmassen, enthaltend
(A) mindestens eine Verbindung mit mindestens zwei (Meth)acrylatgruppen, die ausgewählt ist aus der Gruppe bestehend aus Polyester(meth)acrylat, Polyether(meth)acrylat, Polycarbonat(meth)acrylat, Epoxi(meth)acrylat und Urethan(meth)acrylat,
(B) gegebenenfalls mindestens eine Verbindung mit mindestens einer ethylenisch ungesättigten Gruppe, die eine andere als (A) ist,
(C) Adipinsäuredivinylester,
(D) gegebenenfalls mindestens ein Lösungsmittel,
(E) mindestens einen Photoinitiator und
(F) gegebenenfalls weitere lacktypische Bestandteile,
wobei der Anteil des Adipinsäuredivinylester (C) an der Summe der strahlungshärtbaren Bestandteile (A) + (B) + (C) mindestens 20 Gew% beträgt.

Mit Adipinsäuredivinylester kann die Viskosität von Beschichtungsmassen stärker verringert werden, als mit anderen gängigen difunktionellen Reaktivverdünnern. Entgegen der Lehre der EP 552795 A1 sind auch Beschichtungsmassen mit mehr als 20 Gew% Gehalt an Adipinsäuredivinylester bei Temperatur unter 120 °C gut strahlungshärtbar.

Bei den Verbindungen (A) handelt es sich um mindestens eine Verbindung mit mindestens zwei (Meth)acrylatgruppen, die ausgewählt ist aus der Gruppe bestehend aus Polyester(meth)acrylat, Polyether(meth)acrylat, Polycarbonat(meth)acrylat, Epoxid(meth)acrylat und Urethan(meth)acrylat.

Epoxid(meth)acrylate sind erhältlich durch Umsetzung von Epoxiden mit (Meth)acrylsäure. Als Epoxide in Betracht kommen z.B epoxidierte Olefine, aromatische Glycidylether oder aliphatische Glycidylether, bevorzugt solche von aromatischen oder aliphatischen Glycidylethern.

Epoxidierte Olefine können beispielsweise sein Ethylenoxid, Propylenoxid, iso-Butylenoxid, 1-Butenoxid, 2-Butenoxid, Vinyloxiran, Styroloxid oder Epichlorhydrin, bevorzugt sind Ethylenoxid, Propylenoxid, iso-Butylenoxid, Vinyloxiran, Styroloxid oder Epichlorhydrin, besonders bevorzugt Ethylenoxid, Propylenoxid oder Epichlorhydrin und ganz besonders bevorzugt Ethylenoxid und Epichlorhydrin.

Aromatische Glycidylether sind z.B. Bisphenol-A-diglycidylether, Bisphenol-F-diglycidylether, Bisphenol-B-diglycidylether, Bisphenol-S-diglycidylether, Hydrochinondiglycidylether, Alkylierungsprodukte von Phenol/Dicyclopentadien, z.B. 2,5-bis[(2,3-Epoxypropoxy)phenyl]octahydro-4,7-methano-5H-inden) (CAS-Nr. [13446-85-0]), Tris[4-(2,3-epoxypropoxy)phenyl]methan Isomere)CAS-Nr. [66072-39-7]), Phenol basierte Epoxy Novolake (CAS-Nr. [9003-35-4]) und Kresol basierte Epoxy Novolake (CAS-Nr. [37382-79-9]).

Aliphatische Glycidylether sind beispielsweise 1,4-Butandioldiglycidether, 1,6-Hexandioldiglycidylether, Trimethylolpropantriglycidylether, Pentaerythrittetraglycidylether, 1,1,2,2-tetrakis[4-(2,3-epoxypropoxy)phenyl]ethan (CAS-Nr. [27043-37-4]), Diglycidylether von Polypropylenglykol (α,ω-bis(2,3-epoxypropoxy)poly(oxypropylen) (CAS-Nr. [16096-30-3]) und von hydriertem Bisphenol A (2,2-bis[4-(2,3-epoxypropoxy)cyclohexyl]propan, CAS-Nr. [13410-58-7]).

Bevorzugt handelt es sich bei dem Epoxid(meth)acrylat um das Umsetzungsprodukt von (Meth)acrylsäure mit Bisphenol-A-diglycidylether, Bisphenol-F-diglycidylether, 1,4-Butandioldiglycidether, 1,6-Hexandioldiglycidylether, Trimethylolpropantriglycidylether, Pentaerythrittetraglycidylether, 1,1,2,2-tetrakis[4-(2,3-epoxypropoxy)phenyl]ethan (CAS-Nr. [27043-37-4]), Diglycidylether von Polypropylenglykol (α,ω-bis(2,3-epoxypropoxy)poly(oxypropylen) (CAS-Nr. [16096-30-3]) oder von hydriertem Bisphenol A (2,2-bis[4-(2,3-epoxypropo-xy)cyclohexyl]propan, CAS-Nr. [13410-58-7]).

Die Epoxid(meth)acrylate haben vorzugsweise ein zahlenmittleres Molgewicht Mₙ von 1000 bis 20000, besonders bevorzugt von 1000 bis 10000 g/mol und ganz besonders bevorzugt von 2000 bis 3000 g/mol; der Gehalt an (Meth)acrylgruppen beträgt vorzugsweise 1 bis 5, besonders bevorzugt 2 bis 4 pro 1000 g Epoxid(meth)acrylat (bestimmt durch Gelpermeationschromatographie mit Polystyrol als Standard und Tetrahydrofuran als Elutionsmittel).

Bevorzugt sind ebenfalls Polyurethan(meth)acrylate. Diese sind beispielsweise erhältlich durch Umsetzung von Hydroxyalkyl(meth)acrylaten mit Isocyanatgruppen.

Derartige Urethan(meth)acrylate sind z.B. erhältlich durch Umsetzung von Polyisocyanaten mit Hydroxyalkyl(meth)acrylaten und gegebenenfalls Kettenverlängerungsmitteln wie Diolen, Polyolen, Diaminen, Polyaminen oder Dithiolen oder Polythiolen.

Die Polyurethan(meth)acrylate enthalten als Aufbaukomponenten bevorzugt:
(a) mindestens ein organisches aliphatisches, aromatisches oder cycloaliphatisches Di- oder Polyisocyanat,
(b) mindestens eine Verbindung mit mindestens einer gegenüber Isocyanat reaktiven Gruppe und mindestens einer (Meth)acrylatgruppe und
(c) gegebenenfalls mindestens eine Verbindung mit mindestens zwei gegenüber Isocyanat reaktiven Gruppen.

Als Komponente (a) kommen beispielsweise aliphatische, aromatische und cycloaliphatische Di- und Polyisocyanate mit einer NCO Funktionalität von mindestens 1,8, bevorzugt 1,8 bis 5 und besonders bevorzugt 2 bis 4 in Frage, sowie deren Isocyanurate, Biurete, Allophanate und Uretdione.

Bei den zugrundeliegenden Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,5-Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5- trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methylcyclohexän sowie 3 (bzw. 4), 8 (bzw. 9)-Bis(isocyanatomethyl)-tricyclo[5.2.1.0^{2.6}]decan-Isomerengemische, sowie aromatische Diisocyanate wie 2,4- oder 2,6-Toluylendiisocyanat und deren Isomerengemische, m- oder p-Xylylendiisocyanat, 2,4'-oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldiphenylmethan-4,4'-diisocyanat, Tetramethylxylylendiisocyanat, 1,4-Diisocyanatobenzol oder Diphenylether-4,4'-diisocyanat.

Bevorzugt sind cycloaliphatische und aliphatische Diisocyanate.

Besonders bevorzugt sind 1-Isocyanato-3,3,5- trimethyl-5-(isocyanatomethyl)cyclohexan (Isophorondiisocyanat), 1,6-Diisocyanatohexan, 4,4'-Di(isocyanatocyclohexyl)methan und 3 (bzw. 4), 8 (bzw. 9)-Bis(isocyanatomethyl)-tricyclo[5.2.1.0^{2.6}]decan-Isomerengemische.

Polyisocyanate und polyisocyanathaltige Gemische sind beispielsweise solche, die Biuret-, Allophanat- und/oder Isocyanuratgruppen aufweisen, bevorzugt um isocyanuratgruppenhaltige und/oder allophanatgruppenhaltige Polyisocyanate. Besonders bevorzugt sind überwiegend Isocyanuratgruppen enthaltende Polyisocyanate. Ganz besonders bevorzugt entspricht der Anteil der Isocyanuratgruppeneinem NCO-Wert von mindestens 5 Gew%, bevorzugt mindestens 10, besonders bevorzugt mindestens 15 Gew% (berechnet als C₃N₃O₃ mit eine Molmasse von 126 g/mol).

Polyisocyanate können beispielsweise sein:
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 2,6 bis 8.
2) Uretdiondiisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiondiisocyanate können als alleinige Komponente oder im Gemisch mit anderen Polyisocyanaten, insbesondere den unter 1) genannten, eingesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 2,8 bis 4,5 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit ein- oder mehrwertigen Alkoholen wie z.B. Methanol, Ethanol, iso-Propanol, n-Propanol, n-Butanol, iso-Butanol, sek-Butanol, tert-Butanol, n-Hexanol, n-Heptanol, n-Octanol, n-Decanol, n-Dodecanol (Laurylalkohol), 2-Ethylhexanol, n-Pentanol, Stearylalkohol, Cetylalkohol, Laurylalkohol, Ethylenglykolmonomethylether, Ethylenglykolmonoethylether, 1,3-Propandiolmonomethylether, Cyclopentanol, Cyclohexanol, Cyclooctanol, Cyclododecanol, Trimethylolpropan, Neopentylglykol, Pentaerythrit, 1,4-Butan-diol, 1,6-Hexandiol, 1,3-Propandiol, 2-Ethyl-1,3-Propandiol, 2-Methyl-1,3-Propan-diol, Ethylenglykol, Diethylenglykol, Triethylenglykol, Tetraethylenglykol, Pentaethylenglykol, Glycerin, 1,2-Dihydroxypropan, 2,2-Dimethyl-1,2-ethandiol, 1,2-Butandiol, 1,4-Butandiol, 3-Methylpentan-1,5-diol, 2-Ethylhexan-1,3-diol, 2,4-Diethyloctan-1,3-diol, Hydroxy-pivalinsäureneopentylglykolester, Ditrimethylolpropan, Dipentaerythrit, 2,2-Bis(4-hydro-xycyclohexyl)propan, 1,1-, 1,2-, 1,3- und 1,4-Cyclohexandimethanol, 1,2-, 1,3- oder 1,4-Cyclohexandiol oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 4,5.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid zugänglich.
6) Iminooxadiazindiongruppen enthaltende Polyisocyanate, vorzugsweise von Hexamethylendiisocyanat oder lsophorondiisocyanat abgeleitet. Solche Iminooxadiazin-diongruppen enthaltenden Polyisocyanate sind aus Diisocyanaten mittels spezieller Katalysatoren herstellbar.
7) Uretonimin-modifizierte Polyisocyanate.
8) Carbodiimid-modifizierte Polyisocyanate.
9) Hyperverzweigte Polyisocyanate, wie sie beispielsweise bekannt sind aus der DE-A1 10013186 oder DE-A1 10013187.
10) Polyurethan-polyisocyanat-Präpolymere, aus Di- und/oder Polyisocyanaten mit Alkoholen.
11) Polyharnstoff-Polyisocyanat-Präpolymere.

Die Polyisocyanate 1) bis 11) können im Gemisch, gegebenenfalls auch im Gemisch mit Diisocyanaten, eingesetzt werden.

Bevorzugt sind isocyanurat- und/oder allophanat- und/oder biuretgruppenhaltige Polyisocyanate.

Weiterhin können diese Gemische noch untergeordnete Mengen an Uretdion-, Biuret-, Urethan-, Allophanat-, Oxadiazintrion-, Iminooxadiazindion- und/oder Uretonimingruppen aufweisen, bevorzugt jeweils unter 25 Gew%, besonders bevorzugt jeweils unter 20 Gew%, ganz besonders bevorzugt jeweils unter 15 Gew%, insbesondere jeweils unter 10 Gew% und speziell jeweils unter 5 Gew% und ganz speziell jeweils unter 2 Gew% bezogen auf die jeweilige funktionelle Gruppe.

Besonders geeignet als isocyanuratgruppenhaltige Verbindungen ist das Isocyanurat des Isophorondiisocyanat mit einem NCO-Gehalt gemäß DIN EN ISO 11909 von 16,7 - 17,6 %, und/oder einer mittleren NCO-Funktionalität von 3,0 bis 4,0, bevorzugt 3,0 bis 3,7, besonders bevorzugt 3,1 bis 3,5. Bevorzugt weisen derartige isocyanuratgruppenhaltiger Verbindungen eine Farbzahl gemäß HAZEN/APHA nach DIN EN 1557 von nicht mehr als 150 auf.

Weiterhin besonders geeignet als isocyanuratgruppenhaltige Verbindung ist das Isocyanurat des 1 ,6-Hexamethylendiisocyanat mit einem NCO-Gehalt gemäß DIN EN ISO 11909 von 21,5 - 23,5 %, und/oder einer mittleren NCO-Funktionalität von 3,0 bis 4,0, bevorzugt 3,0 bis 3,7, besonders bevorzugt 3,1 bis 3,5. Bevorzugt weisen derartige isocyanuratgruppenhaltige Verbindungen eine Farbzahl nach DIN ISO 6271 von nicht mehr als 60 auf. Bevorzugt weisen derartige isocyanuratgruppenhaltige Verbindungen eine Viskosität bei 23 °C gemäß DIN EN ISO 3219 von 1000 bis 4000 mPas bei einem Geschwindigkeitsgefälle von 2500 s⁻¹ auf.

In einer bevorzugten Ausführungsform weisen die Diisocyanate und/oder Polyisocyanate einen Gesamtchlorgehalt von weniger als 400 mg/kg auf, besonders bevorzugt einen Gesamtchlorgehalt von weniger als 80 mg/kg, ganz besonders bevorzugt weniger als 60, insbesondere weniger als 40, speziell weniger als 20 und sogar weniger als 10 mg/kg.

Als Komponente (b) kommen Verbindungen in Betracht, die mindestens eine gegenüber Isocyanat reaktive Gruppe und mindestens eine radikalisch polymerisierbare Gruppe tragen.

Gegenüber Isocyanat reaktive Gruppen können z.B. sein -OH, -SH, -NH₂ und -NHR^{a}, wobei R^{a} Wasserstoff oder eine 1 bis 4 Kohlenstoffatome enthaltende Alkylgruppe, wie z.B. Methyl, Ethyl, n-Propyl, iso-Propyl, n-Butyl, iso-Butyl, sek-Butyl oder tert-Butyl, bedeutet.

Komponenten (b) können z.B. Monoester von Acrylsäure oder Methacrylsäure, bevorzugt Acrylsäure, in dieser Schrift kurz als "(Meth)acrylsäure" bezeichnet, mit Di- oder Polyolen sein, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,4-Butandiol, 1,5-Pentandiol, Neopentylglykol, 1,6-Hexandiol, 2-Methyl-1,5-pentandiol, 2-Ethyl-1,4-butandiol, 1,4-Dimethylolcyclohexan, 2,2-Bis(4-hydroxycyclohexyl)propan, Glycerin, Trimethylolethan, Trimethylolpropan, Trimethylolbutan, Pentaerythrit, Ditrimethylolpropan, Erythrit, Sorbit, Poly-THF mit einem Molgewicht zwischen 162 und 2000, Poly-1,3-propandiol mit einem Molgewicht zwischen 134 und 400 oder Polyethylenglykol mit einem Molgewicht zwischen 238 und 458. Weiterhin können auch Ester oder Amide der (Meth)acrylsäure mit Aminoalkoholen z. B. 2-Aminoethanol, 2-(Methylamino)ethanol, 3-Amino-1-propanol, 1-Amino-2-propanol oder 2-(2-Aminoethoxy)ethanol, 2-Mercaptoethanol oder Polyaminoalkane, wie Ethylendiamin oder Diethylentriamin verwendet werden.

Weiterhin sind auch Polyether- oder Polyesterole oder Polyacrylatpolyole mit einer mittleren OH-Funktionalität von 2 bis 10 geeignet.

Beispiele für Amide von (Meth)acrylsäure mit Aminoalkoholen sind Hydroxyalkyl(meth)acrylamide wie N-Hydroxymethylacrylamid, N-Hydroxymethyl-methacrylamid, N-Hydroxyethylacrylamid, N-Hydroyxethylmethacrylamid und 5-Hydroxy-3-oxapentyl(meth)acrylamid.

Bevorzugt verwendet werden 2-Hydroxyethyl(meth)acrylat, 2- oder 3-Hydroxypropyl(meth)acrylat, 1,4-Butandiolmono(meth)acrylat, Neopentylglykolmono(meth)acrylat, 1,5-Pentandiolmono(meth)acrylat, 1,6-Hexandiolmono(meth)acrylat, Glycerinmono- und di(meth)acrylat, Trimethylolpropanmono- und di(meth)acrylat, Pentaerythritmono-, -di- und -tri(meth)acrylat, 2-Amino-ethyl(meth)acrylat, 2-Aminopropyl(meth)acrylat, 3-Aminopropyl(meth)acrylat, 4-Aminobutyl(meth)acrylat, 6-Aminohexyl(meth)acrylat, 2-Thioethyl(meth)acrylat, 2-Aminoethyl(meth)acrylamid, 2-Aminopropyl(meth)acrylamid, 3-Aminopro-pyl(meth)-acrylamid, 2-Hydroxyethyl(meth)acrylamid, 2-Hydroxypropyl(meth)acrylamid oder 3-Hydroxypropyl(meth)acrylamid. Besonders bevorzugt sind 2-Hydroxy-ethylacrylat, 2-Hydroxyethylmethacrylat, 2- oder 3-Hydroxypropylacrylat, 1,4-Butan-diolmonoacrylat und 3-(Acryloyloxy)-2-hydroxypropylmethacrylat.

Als Komponente (c) kommen Verbindungen in Betracht, die mindestens zwei gegenüber Isocyanat reaktive Gruppen, beispielsweise -OH, -SH, -NH₂ oder-NHR^{b}, worin R^{b} darin unabhängig voneinander Wasserstoff, Methyl, Ethyl, iso-Propyl, n-Propyl, n-Butyl, iso-Butyl, sek-Butyl oder tert-Butyl bedeuten kann, aufweisen.

Dies sind bevorzugt Diole oder Polyole, wie 2 bis 20 Kohlenstoffatome aufweisende Kohlenwasserstoffdiole, z.B. Ethylenglycol, 1,2-Propandiol, 1,3-Propandiol, 1,1-Dimethylethan-1,2-diol, 1,6-Hexandiol, 1,10-Dekandiol, Bis-(4-hydroxycyclohexan) isopropyliden, Tetramethylcyclobutandiol, 1,2-, 1,3- oder 1,4-Cyclohexandiol, Cyclooctandiol, Norbornandiol, Pinandiol, Decalindiol, etc. deren Ester mit kurzkettigen Dicarbonsäuren, wie Adipinsäure, Cyclohexandicarbonsäure, deren Carbonate, hergestellt durch Reaktion der Diole mit Phosgen oder durch Umesterung mit Dialkyl- oder Diarylcarbonaten, oder aliphatische Diamine, wie Methylen-, und Isopropyliden-bis-(cyclohexylamin), Piperazin, 1,2-, 1,3- oder 1,4-Diaminocyclohexan, 1,2-, 1,3- oder 1,4-Cyclohexan-bis-(methylamin), etc., Dithiole oder mehrfunktionelle Alkohole, sekundäre oder primäre Aminoalkohole, wie Ethanolamin, Diethanolamin, Monopropanolamin, Dipropanolamin etc. oder Thioalkohole, wie Thioethylenglykol.

Weiterhin sind denkbar Diethylenglykol, Triethylenglykol, Dipropylenglykol, Tripropylenglykol, Neopentylglykol, Pentaerythrit, 1,2- und 1,4-Butandiol, 1,5-Pentandiol, 2-Methyl-1,5-pentandiol, 2-Ethyl-1,4-butandiol, 1,2-, 1,3- und 1,4-Dimethylolcyclohexan, 2,2-Bis(4-hydroxycyclohexyl)propan, Glycerin, Trimethylolethan, Trimethylolpropan, Trimethylolbutan, Dipentaerythrit, Ditrimethylolpropan, Erythrit und Sorbit, 2-Aminoethanol, 3-Amino-1-propanol, 1-Amino-2-propanol oder 2-(2-Aminoethoxy)-ethanol, Bisphenol A, oder Butantriol.

Weiterhin sind auch Polyether- oder Polyesterole oder Polyacrylatpolyole mit einer mittleren OH-Funktionalität von 2 bis 10 geeignet, sowie Polyamine, wie z.B. Polyethylenimin oder freie Amingruppen enthaltende Polymere von z.B. Poly-N-vinylformamid.

Besonders geeignet sind hier die cycloaliphatischen Diole, wie z.B. Bis-(4-hydroxy-cyclohexan) isopropyliden, Tetramethylcyclobutandiol, 1,2-, 1,3- oder 1,4-Cyclohexandiol, Cyclooctandiol oder Norbornandiol.

Die verwendbaren Polyurethane werden durch Reaktion der Komponenten (a), (b) und (c) miteinander erhalten.

Dabei ist die molare Zusammensetzung (a):(b):(c) pro 3 mol reaktive Isocycanatgruppen in (a) in der Regel wie folgt:
(b) 1,5 - 3,0, bevorzugt 1,5 - 2,5, besonders bevorzugt 1,5 - 2,0 und insbesondere 1,6-1,8 mol gegenüber Isocyanat reaktive Gruppen sowie
(c) 0-1,5. bevorzugt 0,5 - 1,5, besonders bevorzugt 0,7 - 1,5 und insbesondere 0,8 - 1,5 mol an gegenüber Isocyanat reaktiven Gruppen.

Die Bildung des Addukts aus isocyanatgruppenhaltiger Verbindung und der Verbindung, die gegenüber Isocyanatgruppen reaktive Gruppen enthält erfolgt in der Regel durch Mischen der Komponenten in beliebiger Reihenfolge, gegebenenfalls bei erhöhter Temperatur.

Bevorzugt wird dabei die Verbindung, die gegenüber Isocyanatgruppen reaktive Gruppen enthält, zu der isocyanatgruppenhaltigen Verbindung zugegeben, bevorzugt in mehreren Schritten.

Besonders bevorzugt wird die isocyanatgruppenhaltige Verbindung vorgelegt und die Verbindungen, die gegenüber Isocyanat reaktive Gruppen enthalten, zugegeben. Insbesondere wird die isocyanatgruppenhaltige Verbindung (a) vorgelegt und daraufhin (b) zugegeben. Nachfolgend können gegebenenfalls gewünschte weitere Komponenten zugegeben werden.

In der Regel wird die Reaktion bei Temperaturen zwischen 5 und 100 °C, bevorzugt zwischen 20 bis 90 °C und besonders bevorzugt zwischen 40 und 80°C und insbesondere zwischen 60 und 80 °C durchgeführt.

Bevorzugt wird dabei unter wasserfreien Bedingungen gearbeitet.
Wasserfrei bedeutet dabei, daß der Wassergehalt im Reaktionssystem nicht mehr als 5 Gew% beträgt, bevorzugt nicht mehr als 3 Gew% und besonders bevorzugt nicht mehr als 1 Gew%.

Um eine Polymerisation der polymerisationsfähigen Doppelbindungen zurückzudrängen, wird bevorzugt unter einem sauerstoffhaltigen Gas gearbeitet, besonders bevorzugt Luft oder Luft-Stickstoff-Gemische.

Als sauerstoffhaltiges Gas können bevorzugt Luft oder ein Gemisch aus Sauerstoff oder Luft und einem unter den Einsatzbedingungen inerten Gas verwendet werden. Als inertes Gas können Stickstoff, Helium, Argon, Kohlenmonoxid, Kohlendioxid, Wasserdampf, niedere Kohlenwasserstoffe oder deren Gemische verwendet werden.

Der Sauerstoffgehalt des sauerstoffhaltigen Gases kann beispielsweise zwischen 0,1 und 22 Vol%, bevorzugt von 0,5 bis 20 betragen, besonders bevorzugt 1 bis 15, ganz besonders bevorzugt 2 bis 10 und insbesondere 4 bis 10 Vol%. Selbstverständlich können, falls gewünscht, auch höhere Sauerstoffgehalte eingesetzt werden.

Die Reaktion kann auch in Gegenwart eines inerten Solvens durchgeführt werden, z.B. Aceton, Iso-butyl-methylketon, Toluol, Xylol, Butylacetat oder Ethoxyethylacetat. Bevorzugt wird die Reaktion jedoch in Abwesenheit eines Solvens durchgeführt.

Die Urethan(meth)acrylate haben vorzugsweise ein zahlenmittleres Molgewicht Mₙ von 1000 bis 20 000, insbesondere von 1000 bis 10 000 besonders bevorzugt 1000 bis 4000 g/mol (bestimmt durch Gelpermeationschromatographie mit Tetrahydrofuran und Polystyrol als Standard).

Die Urethan(meth)acrylate haben vorzugsweise einen Gehalt von 1 bis 5, besonders bevorzugt von 2 bis 4 Mol (Meth)acrylgruppen pro 1000 g Urethan(meth)acrylat. In einer bevorzugten Ausführungsform werden solche Verbindungen eingesetzt, wie in der WO 00/39183, S.4, Z. 3 bis S. 10, Z. 19 beschrieben, deren Offenbarung hiermit Bestandteil der vorliegenden Schrift sei. Besonders bevorzugt sind unter diesen solche Verbindungen, die als Aufbaukomponenten mindestens ein Allophanatgruppen aufweisendes, (cyclo)aliphatisches Isocyanat und mindestens ein Hydroxyalkyl(meth)acrylat aufweisen, ganz besonders bevorzugt die Produkte Nr. 1 bis 9 in Tabelle 1 auf S. 24 der WO 00/39183.

Weiterhin geeignete strahlungshärtbare Verbindungen sind Carbonat(meth)acrylate, die im Mittel vorzugsweise 1 bis 5, insbesondere 2 bis 4, besonders bevorzugt 2 bis 3 (Meth)acrylgruppen und ganz besonders bevorzugt 2(Meth)acrylgruppen enthalten.

Das zahlenmittlere Molekulargewicht Mₙ der Carbonat(meth)acrylate ist vorzugsweise 2000 bis 3000 g/mol (bestimmt durch Gelpermeationschromatgraphie mit Polystyrol als Standard, Lösemittel Tetrahydrofuran).

Die Carbonat(meth)acrylate sind in einfacher Weise erhältlich durch Umesterung von Kohlensäureestern mit mehrwertigen, vorzugsweise zweiwertigen Alkoholen (Diolen, z.B. Hexandiol) und anschließende Veresterung der freien OH-Gruppen mit (Meth)acrylsäure oder auch Umesterung mit (Meth)acrylsäureestern, wie es z.B. in EP-A 92 269 beschrieben ist. Erhältlich sind sie auch durch Umsetzung von Phosgen, Harnstoffderivaten mit mehrwertigen, z.B. zweiwertigen Alkoholen.

Denkbar sind auch (Meth)acrylate von Polycarbonatpolyolen, wie das Reaktionsprodukt aus einem der genannten Di- oder Polyole und einem Kohlensäureester sowie einem hydroxylgruppenhaltigen (Meth)acrylat.

Geeignete Kohlensäureester sind z.B. Ethylen-, 1,2- oder 1,3-Propylencarbonat, Kohlensäuredimethyl-, -diethyl- oder -dibutylester.

Geeignete hydroxygruppenhaltige (Meth)acrylate sind beispielsweise 2-Hydroxyethyl-(meth)acrylat, 2- oder 3-Hydroxypropyl(meth)acrylat, 1,4-Butandiolmono(meth)acrylat, Neopentylglykolmono(meth)acrylat, Glycerinmono- und di(meth)acrylat, Trimethylolpropanmono- und -di(meth)acrylat sowie Pentaerythritmono-, -di- und -tri(meth)acrylat.

Besonders bevorzugte Carbonat(meth)acrylate sind solche der Formel: 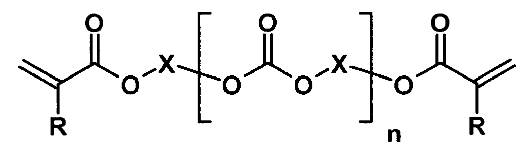 worin R für H oder CH₃, X für eine C₂-C₁₈ Alkylengruppe und n für eine ganze Zahl von 1 bis 5, vorzugsweise 1 bis 3 steht.

R steht vorzugsweise für H und X steht vorzugsweise für C₂- bis C₁₀-Alkylen, beispielsweise 1,2-Ethylen, 1,2-Propylen, 1,3-Propylen, 1,4-Butylen oder 1,6-Hexylen, besonders bevorzugt für C₄- bis C₈-Alkylen. Ganz besonders bevorzugt steht X für C₆-Alkylen.

Vorzugsweise handelt es sich um aliphatische Carbonat(meth)acrylate.

Als (Meth)acrylatverbindungen seien weiterhin Polyester(meth)acrylate genannt, wobei es sich um die (Meth)Acrylsäureester von Polyesterolen handelt.

Polyesterpolyole, sind z.B. aus Ullmanns Encyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt:

Oxalsäure, Bernsteinsäure, Glutarsäure, Adipinsäure, Sebacinsäure, Dodekandisäure, o-Phthalsäure, Isophthalsäure, Terephthalsäure, Trimellithsäure, Azelainsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, dimere Fettsäuren, deren Isomere und Hydrierungsprodukte sowie veresterbare Derivate, wie Anhydride oder Dialkylester, beispielsweise C₁-C₄-Alkylester, bevorzugt Methyl-, Ethyl- oder n-Butylester, der genannten Säuren eingesetzt werden. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure.

Als mehrwertige Alkohole kommen zur Herstellung der Polyesterole in Betracht 1,2-Propandiol, Ethylenglykol, 2,2-Dimethyl-1,2-Ethandiol, 1,3-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Poly-THF mit einer Molmasse zwischen 162 und 2000, Poly-1,3-propandiol mit einer Molmasse zwischen 134 und 1178, Poly-1,2-propandiol mit einer Molmasse zwischen 134 und 898, Polyethylenglykol mit einer Molmasse zwischen 106 und 458, Neopentylglykol, Hydroxypivalinsäureneopentylglykolester, 2-Ethyl-1,3-Propandiol, 2-Methyl-1,3-Propandiol, 2,2-Bis(4-hydroxy-cyclohexyl)propan, 1,1-, 1,2-, 1,3- und 1,4-Cyclohexandimethanol, 1,2-, 1,3- oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt.

Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Ethylenglycol, Butan-1,4-diol, Hexan-1,6-diol, Octan-1,8-diol und Dodecen-1,12- diol. Weiterhin bevorzugt ist Neopentylglykol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, gamma-Butyrolacton und/oder Methyl-ε-caprolacton, 4-Hydroxybenzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Polyester(meth)acrylate können in mehreren Stufen oder auch einstufig, wie z.B. in EP 279 303 beschrieben, aus Acrylsäure, Polycarbonsäure, Polyol hergestellt werden.

Bevorzugt sind die Verbindungen (A) ausgewählt aus der Gruppe bestehend aus Epoxid(meth)acrylaten, Urethan(meth)acrylaten, Polyester(meth)acrylaten und Polyether(meth)acrylaten, besonders bevorzugt aus der Gruppe bestehend aus Urethan(meth)acrylaten und Polyether(meth)acrylaten und ganz besonders bevorzugt handelt es sich um mindestens ein Polyether(meth)acrylat.

Bei der Verbindung (B) handelt es sich um mindestens eine Verbindung mit mindestens einer ethylenisch ungesättigten Gruppe, die eine andere als (A) ist.

Bevorzugt handelt es sich dabei um Verbindungen mit einer oder zwei ethylenisch ungesättigten Gruppen, bevorzugt (Meth)acrylatgruppen.

Bevorzugt weisen diese Verbindungen ein zahlenmittleres Molekulargewicht unter 2000 g/mol auf (bestimmt durch Gelpermeationschromatographie mit Polystyrol als Standard).

Genannt seien z.B. C₁-C₂₀-Alkyl (meth) acrylate, Vinylaromaten mit bis zu 20 C-Atomen, Vinylester von bis zu 20 C-Atomen enthaltenden Carbonsäuren, ethylenisch ungesättigte Nitrile, Vinylether von 1 bis 10 C-Atome enthaltenden Alkoholen und aliphatischen Kohlenwasserstoffen mit 2 bis 20, bevorzugt 2 bis 8 C-Atomen und 1 oder 2 Doppelbindungen.

Als (Meth)acrylsäurealkylester bevorzugt sind solche mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat und Vinylacetat.

Als vinylaromatische Verbindungen kommen z.B. Vinyltoluol, α-Butylstyrol, 4-n-. Butylstyrol, 4-n-Decylstyrol und vorzugsweise Styrol in Betracht.

Beispiele für Nitrile sind Acrylnitril und Methacrylnitril.

Geeignete Vinylether sind z.B. Vinylmethylether, Vinylisobutylether, Vinylhexyl- und - octylether.

Als nicht aromatische Kohlenwasserstoffe mit 2 bis 20, bevorzugt 2 bis 8 C-Atomen und eine oder zwei olefinischen Doppelbindungen seien Butadien, Isopren, sowie Ethylen, Propylen und Isobutylen genannt.

In Betracht kommen bevorzugt, radikalisch polymerisierbare Verbindungen mit mehreren ethylenisch ungesättigten Gruppen.

Insbesondere handelt es sich hierbei um (Meth)acrylatverbindungen, bevorzugt sind jeweils die Acrylatverbindungen, d.h. die Derivate der Acrylsäure.

Als (Meth)acrylatverbindungen genannt seien (Meth)acrylsäureester und insbesondere Acrylsäureester von mehrfunktionellen Alkoholen, insbesondere solchen, die neben den Hydroxylgruppen keine weiteren funktionellen Gruppen oder allenfalls Ethergruppen enthalten. Beispiele solcher Alkohole sind z.B. bifunktionelle Alkohole, wie Ethylenglykol, Propylenglykol, und deren höher kondensierte Vertreter, z.B. wie Diethylenglykol, Triethylenglykol, Dipropylenglykol, Tripropylenglykol etc., Butandiol, Pentandiol, Hexandiol, Neopentylglykol, alkoxylierte phenolische Verbindungen, wie ethoxylierte bzw. propoxylierte Bisphenole, Cyclohexandimethanol, trifunktionelle und höherfunktionelle Alkohole, wie Glycerin, Trimethylolpropan, Trimethylolethan, Neopentylglykol, Pentaerythrit, Glycerin, Ditrimethylolpropan, Dipentaerythrit, Sorbitol, Mannitol, Diglycerol, 1,2-Propandiol, Ethylenglykol, 2,2-Dimethyl-1,2-Ethandiol, Neopentylglykol, 1,3-Propandiol, 1,2-Butandiol, 1,4-Butandiol, Butantriol, Sorbit, Mannit und die entsprechenden alkoxylierten, insbesondere ethoxy- und propoxylierte Alkohole.

Die Alkoxylierungsprodukte sind in bekannter Weise durch Umsetzung der vorstehenden Alkohole mit Alkylenoxiden, beispielsweise Ethylenoxid, Propylenoxid, Butylenoxid, iso-Butylenoxid und Vinyloxiran in beliebiger Reihenfolge oder als Gemisch, bevorzugt Ethylen- und/oder Propylenoxid und besonders bevorzugt Ethylenoxid, erhältlich. Vorzugsweise beträgt der Alkoxylierungsgrad je Hydroxylgruppe 0 bis 10, d.h. 1 mol Hydroxylgruppe kann vorzugsweise mit bis zu 10 mol Alkylenoxiden alkoxyliert sein.

Vinylethergruppenhaltige Polyetheralkohole werden beispielsweise entsprechend durch Umsetzung von Hydroxyalkylvinylethern mit Alkylenoxiden erhalten.

(Meth)acrylsäuregruppenhaltige Polyetheralkohole können beispielsweise durch Umesterung von (Meth)acrylsäureestern mit den Polyetheralkoholen, durch Veresterung der Polyetheralkohole mit (Meth)acrylsäure oder durch Einsatz von hydroxygruppenhaltigen (Meth)acrylaten wie oben unter (b) beschrieben erhalten werden.

Bevorzugte Polyether(meth)acrylate sind die vollständig (meth)acrylierten bevorzugt acrylierten Ester von Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,4-Butandiol, 1,5-Pentandiol, Neopentylglykol, 1,6-Hexandiol, 2-Methyl-1,5-pentandiol, 2-Ethyl-1,4-butandiol, 1,4-Dimethylolcyclohexan, 2,2-Bis(4-hydroxycyclohexyl)propan, Glycerin, Trimethylolethan, Trimethylolpropan, Trimethylolbutan, Pentaerythrit, Ditrimethylolpropan, Erythrit, Sorbit, Poly-THF mit einem Molgewicht zwischen 162 und 2000, Poly-1,3-propandiol mit einem Molgewicht zwischen 134 und 400 oder Polyethylenglykol mit einem Molgewicht zwischen 238 und 458.

Bevorzugt handelt es sich um alkoxylierte Polyole der Formeln (la) bis (Id) 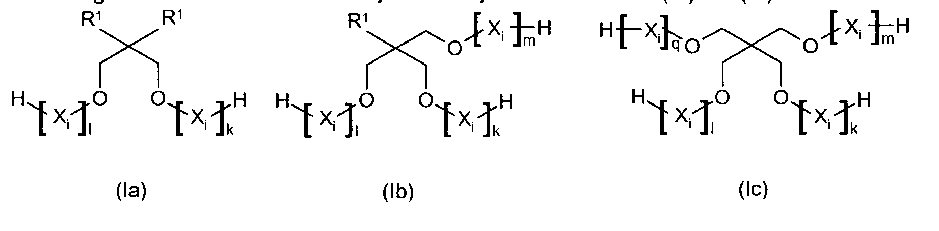 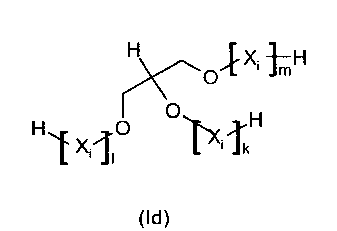 worin
R¹ und R² unabhängig voneinander Wasserstoff oder gegebenenfalls durch Aryl, Alkyl, Aryloxy, Alkyloxy, Heteroatome und/oder Heterocyclen substituiertes C₁ - C₁₈-Alkyl,
k, I, m, q unabhängig voneinander je für eine ganze Zahl von 1 bis 10, bevorzugt 1 bis 5 und besonders bevorzugt 1 bis 3 steht und
jedes Xᵢ für i = 1 bis k, 1 bis I, 1 bis m und 1 bis q unabhängig voneinander ausgewählt sein kann aus der Gruppe -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-,
worin Ph für Phenyl und Vin für Vinyl steht.

Darin bedeuten gegebenenfalls durch Aryl, Alkyl, Aryloxy, Alkyloxy, Heteroatome und/oder Heterocyclen substituiertes C₁ - C₁₈-Alkyl beispielsweise Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hetadecyl, Octadecyl, 1,1-Dimethylpropyl, 1,1-Dimethylbutyl, 1,1,3,3-Tetramethylbutyl, bevorzugt Methyl, Ethyl oder n-Propyl, ganz besonders bevorzugt Methyl oder Ethyl.

Bevorzugt handelt es sich dabei um (Meth)Acrylate von ein- bis zwanzigfach und besonders bevorzugt drei- bis zehnfach ethoxyliertem, propoxyliertem oder gemischt ethoxyliertem und propoxyliertem und insbesondere ausschließlich ethoxyliertem Neopentylglykol, Trimethylolpropan, Trimethylolethan oder Pentaerythrit.

Bevorzugte multifunktionelle, polymerisationsfähige Verbindungen sind Ethylenglykoldiacrylat, 1,2-Propandioldiacrylat, 1,3-Propandioldiacrylat, 1,4-Butandioldiacrylat, 1,6-Hexandioldiacrylat, Trimethylolpropantriacrylat, Pentaerythrittetraacrylat, Polyestepolyolenacrylate, Polyetherolacrylate und Triacrylat von ein- bis zwanzigfach alkoxyliertem, besonders bevorzugt ethoxyliertem Trimethylolpropan.

Ganz besonders bevorzugte multifunktionelle, polymerisationsfähige Verbindungen sind 1,4-Butandioldiacrylat, 1,6-Hexandioldiacrylat, Trimethylolpropantriacrylat, Pentaerythrittetraacrylat und Triacrylat von ein- bis zwanzigfach ethoxyliertem Trimethylolpropan.

(C) Die Reinheit des eingesetzten Adipinsäuredivinylester (Divinyladipat, 1,6-Hexandisäure di(ethenyl)ester, CAS 4074-90-2) spielt keine erfindungswesentliche Rolle. In der Regel reicht eine Reinheit von mindestens 90%, bevorzugt mindestens 95%, besonders bevorzugt mindestens 98% und ganz besonders bevorzugt mindestens 99% aus.

Der Adipinsäuredivinylester kann beliebig hergestellt werden. Die Herstellung ist nicht erfindungswesentlich.

Des weiteren kann die Mischung noch mindestens ein Lösungsmittel (D) enthalten. Dies können beispielsweise Ester, wie z.B. Butylacetat oder Ethylacetat, aromatische oder (cyclo)aliphatische Kohlenwasserstoffe, wie z.B. Xylol, Toluol oder Heptan, Ketone, wie z.B. Aceton, iso-Butylmethylketon, Methylethylketon oder Cyclohexanon, Alkohole wie z.B. Ethanol, Isopropanol, Mono- oder niedere Oligoethylen- oder -propylenglykole, ein- oder zweifach veretherte Ethylen- oder Propylenglykolether, Glykoletheracetate, wie z.B. Methoxypropylacetat, cyclische Ether wie Tetrahydrofuran, Carbonsäureamide wie Dimethylformamid oder N-Methylpyrrolidon und/oder Wasser sein.

Bevorzugt ist kein Lösungsmittel enthalten.

Als Photoinitiatoren (D) können dem Fachmann bekannte Photoinitiatoren verwendet werden, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

In Betracht kommen beispielsweise Phosphinoxide, Benzophenone, α-Hydroxy-alkyl-aryl-ketone, Thioxanthone, Anthrachinone, Acetophenone, Benzoine und Benzoinether, Ketale, Imidazole oder Phenylglyoxylsäuren.

Phosphinoxide sind beispielsweise Mono- oder Bisacylphosphinoxide, wie z.B. Irgacure® 819 (Bis(2,4,6-Trimethylbenzoyl)phenylphosphinoxid), wie sie z.B. in EP-A 7 508, EP-A 57 474, DE-A 196 18 720, EP-A 495 751 oder EP-A 615 980 beschrieben sind, beispielsweise 2,4,6-Trimethylbenzoyldiphenylphosphinoxid (Lucirin^{®} TPO), Ethyl-2,4,6-trimethylbenzoylphenylphosphinat, Bis(2,6-dimethoxybenzoyl)-2,4,4-trimethylpentylphosphinoxid,

Benzophenone sind beispielsweise Benzophenon, 4-Aminobenzophenon, 4,4'-Bis(dimethylamino)benzophenon, 4-Phenylbenzophenon, 4-Chlorbenzophenon, Michlers Keton, o-Methoxybenzophenon, 2,4,6-Trimethylbenzophenon, 4-Methylbenzophenon, 2,4-Dimethylbenzophenon, 4-Isopropylbenzophenon, 2-Chlorbenzophenon, 2,2'-Dichlorbenzophenon, 4-Methoxybenzophenon, 4-Propoxybenzophenon oder 4-Butoxybenzophenon

α-Hydroxy-alkyl-aryl-ketone sind beispielsweise 1-Benzoylcyclohexan-1-ol (1-Hydroxy-cyclohexyl-phenylketon), 2-Hydroxy-2,2-dimethylacetophenon (2-Hydroxy-2-methyl-1-phenyl-propan-1-on), 1-Hydroxyacetophenon, 1-[4-(2-Hydroxyethoxy)-phenyl]-2-hydroxy-2-methyl-1-propan-1-on, Polymeres, das 2-Hydroxy-2-methyl-1-(4-isopropen-2-yl-phenyl)-propan-1-on einpolymerisiert enthält (Esacure® KIP 150)

Xanthone und Thioxanthone sind beispielsweise 10-Thioxanthenon, Thioxanthen-9-on, Xanthen-9-on, 2,4-Dimethylthioxanthon, 2,4-Diethylthioxanthon, 2,4-Di-isopropylthioxanthon, 2,4-Dichlorthioxanthon, Chloroxanthenon,

Anthrachinone sind beispielsweise β-Methylanthrachinon, tert-Butylanthrachinon, Anthrachinoncarbonylsäureester, Benz[de]anthracen-7-on, Benz[a]anthracen-7,12-dion, 2-Methylanthrachinon, 2-Ethylanthrachinon, 2-tert-Butylanthrachinon, 1-Chloranthrachinon, 2-Amylanthrachinon

Acetophenone sind beispielsweise Acetophenon, Acetonaphthochinon, Valerophenon, Hexanophenon, α-Phenylbutyrophenon, p-Morpholinopropiophenon, Dibenzosuberon, 4-Morpholinobenzophenon, p-Diacetylbenzol, 4'-Methoxyacetophenon, α-Tetralon, 9-Acetylphenanthren, 2-Acetylphenanthren, 3-Acetylphenanthren, 3-Acetylindol, 9-Fluorenon, 1-Indanon, 1,3,4-Triacetylbenzol, 1-Acetonaphthon, 2-Acetonaphthon, 2,2-Dimethoxy-2-phenylacetophenon, 2,2-Diethoxy-2-phenylacetophenon, 1,1-Dichloracetophenon, 1-Hydroxyacetophenon, 2,2-Diethoxyacetophenon, 2-Methyl-1-[4-(methylthio)phenyl]-2-morpholinopropan-1-on, 2,2-Dimethoxy-1,2-diphenylethan-2-on, 2-Benzyl-2-dimethylamino-1-(4-morpholinophenyl)-butan-1-on

Benzoine und Benzoinether sind beispielsweise 4-Morpholinodeoxybenzoin, Benzoin, Benzoin-iso-butylether, Benzoin-tetrahydropyranylether, Benzoin-methylether, Benzoin-ethylether, Benzoin-butylether, Benzoin-iso-propylether, 7-H-Benzoin-methylether,

Ketale sind beispielsweise Acetophenondimethylketal, 2,2-Diethoxyacetophenon, Benzilketale, wie Benzildimethylketal,

Phenylglyoxylsäuren sind beispielsweise wie in DE-A 198 26 712, DE-A 199 13 353 oder WO 98/33761 beschrieben.

Ferner sind als Photoinitiatoren einsetzbar Benzaldehyd, Methylethylketon, 1-Naphthaldehyd, Triphenylphosphin, Tri-o-Tolylphosphin, 2,3-Butandion.

Gemische von Photoinitiatoren sind beispielsweise 2-Hydroxy-2-Methyl-1-phenyl-propan-2-on und 1-Hydroxy-cyclohexyl-phenylketon, Bis(2,6-d.imethoxybenzoyl)-2,4,4-trimethylpentylphosphinoxid und 2-Hydroxy,-2-methyl-1-phenyl-propan-1-on, Benzophenon und 1-Hydroxy-cyclohexyl-phenylketon, Bis(2,6-dimethoxybenzoyl)-2,4,4-trimethylpentylphosphinoxid und 1-Hydroxy-cyclohexyl-phenylketon, 2,4,6-Trimethylbenzoyldiphenylphosphinoxid und 2-Hydroxy-2-methyl-1-phenyl-propan-1-on, sowie 2,4,6-Trimethylbenzophenon und 4-Methylbenzophenon, 2,4,6-Trimethylbenzophenon und 4-Methylbenzophenon und 2,4,6-Trimethylbenzoyldiphenylphosphinoxid.

Weitere lacktypische Bestandteile sind beispielsweise Antioxidantien, Stabilisatoren, Aktivatoren (Beschleuniger), Füllmittel, Pigmente, Farbstoffe, antistatische Agentien, Flammschutzmittel, Verdicker, thixotrope Agentien, oberflächenaktive Agentien, Viskositätsmodifikatoren, Plastifizierer oder Chelatbildner verwendet werden.

Weiterhin können ein oder mehrere thermisch aktivierbare Initiatoren zugesetzt werden, z.B. Kaliumperoxodisulfat, Dibenzoylperoxid, Cyclohexanonperoxid, Di-tert.-Butylperoxid, Azobis-iso-butyronitril, Cyclohexylsulfonylacetylperoxid, Di-iso-propylpercarbonat, tert-Butylperoktoat oder Benzpinakol, sowie beispielsweise solche thermisch aktivierbare Initiatoren, die eine Halbwertszeit bei 80 °C von mehr als 100 Stunden aufweise, wie Di-t-Butylperoxid, Cumolhydroperoxid, Dicumylperoxid, t-Butylperbenzoat, silylierte Pinakole, die z. B. unter dem Handelsnamen ADDID 600 der Firma Wacker kommerziell erhältlich sind oder Hydroxylgruppen-haltige Amin-N-Oxide, wie 2,2,6,6-Tetramethylpiperidin-N-oxyl, 4-Hydroxy-2,2,6,6-Tetramethylpiperidin-N-oxyl etc.

Weitere Beispiele geeigneter Initiatoren sind in "Polymer Handbook", 2. Aufl., Wiley & Sons, New York, beschrieben.

Als Verdicker kommen neben radikalisch (co)polymerisierten (Co)Polymerisaten, übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Geeignete Füllstoffe umfassen Silikate, z. B. durch Hydrolyse von Siliciumtetrachlorid erhältliche Silikate wie Aerosil® der Fa. Degussa, Kieselerde, Talkum, Aluminiumsilikate, Magnesiumsilikate, Calciumcarbonate etc.

Geeignete Stabilisatoren umfassen typische UV-Absorber wie Oxanilide, Triazine und Benzotriazol (letztere erhältlich als Tinuvin® -Marken der-Ciba-Spezialitätenchemie) und Benzophenone. Diese können allein oder zusammen mit geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Stabilisatoren werden üblicherweise in Mengen von 0,1 bis 5,0 Gew.-%, bezogen auf die in der Zubereitung enthaltenen festen Komponenten, eingesetzt.

Der Begriff "Pigmente" wird im Sinne dieser Schrift zusammenfassend gebraucht für Pigmente im eigentlichen Sinne, Effektpigmente, Funktionsadditive, Farbstoffe und/oder Füllstoffe, bevorzugt für Pigmente im eigentlichen Sinne und Füllstoffe und besonders bevorzugt für Pigmente im eigentlichen Sinne.

Pigmente im eigentlichen Sinne sind gemäß CD Römpp Chemie Lexikon - Version 1.0, Stuttgart/New York: Georg Thieme Verlag 1995 unter Verweis auf DIN 55943 partikelförmige "im Anwendungsmedium praktisch unlösliche, anorganische oder organische, bunte oder unbunte Farbmittel".

Praktisch unlöslich bedeutet dabei eine Löslichkeit bei 25 °C unter 1 g / 1000 g Anwendungsmedium, bevorzugt unter 0,5, besonders bevorzugt unter 0,25, ganz besonders bevorzugt unter 0,1 und insbesondere unter 0,05 g / 1000 g Anwendungsmedium.

Beispiele für Pigmente im eigentlichen Sinne umfassen beliebige Systeme von Absorptions- und/oder Effektpigmenten, bevorzugt Absorptionspigmente. Anzahl und Auswahl der Pigmentkomponenten sind dabei keinerlei Beschränkungen unterworfen. Sie können den jeweiligen Erfordernissen, beispielsweise dem gewünschten Farbeindruck, beliebig angepaßt werden. Beispielsweise können alle Pigmentkomponenten eines standardisierten Mischlacksystems zugrunde liegen.

Unter Effektpigmenten sind alle Pigmente zu verstehen, die einen plättchenförmigen Aufbau zeigen und einer Oberflächenbeschichtung spezielle dekorative Farbeffekte verleihen. Bei den Effektpigmenten handelt es sich beispielsweise um alle in der Fahrzeug- und Industrielackierung üblicherweise einsetzbaren effektgebenden Pigmente.

Beispiele für derartige Effektpigmente sind reine Metallpigmente, wie z.B. Aluminium-Pigmente (Silberbronze), Eisen-Pigmente, Kupfer-Pigmente, Kupfer/Zink-Pigmente (Goldbronzen) und Zink-Pigmente, insbesondere solche Metalleffektpigmente aus Metall, die sich parallel orientieren lassen und dann durch Reflexion des Lichtes an den Metallplättchen metallähnlichen Glanz zeigen; Interferenzpigmente, deren farbgebende Wirkung ganz oder vorwiegend auf dem Phänomen der Interferenz beruht, bzw. Perlglanzpigmente, wie z.B. titandioxidbeschichteter Glimmer, eisenoxidbeschichteter Glimmer, mischoxidbeschichteter Glimmer (z.B. mit Titandioxid und Fe₂O₃ oder Titandioxid und Cr₂O₃) metalloxidbeschichtetes Aluminium, oder Flüssigkristallpigmente.

Bei den farbgebenden Absorptionspigmenten handelt es sich beispielsweise um übliche in der Lackindustrie einsetzbare organische oder anorganische Absorptionspigmente. Beispiele für organische Absorptionspigmente sind Azopigmente, Phthalocyanin-, Chinacridon- und Pyrrolopyrrolpigmente. Beispiele für anorganische Absorptionspigmente sind Eisenoxidpigmente und Ruß.

Farbstoffe sind ebenfalls Farbmittel und unterscheiden sich von den Pigmenten durch ihre Löslichkeit im Anwendungsmedium, d.h. sie weisen bei 25 °C eine Löslichkeit über 1 g / 1000 g im Anwendungsmedium auf.

Beispiele für Farbstoffe sind Azo-, Azin-, Anthrachinon-, Acridin-, Cyanin-, Oxazin-, Polymethin-, Thiazin-, Triarylmethan-Farbstoffe. Diese Farbstoffe können Anwendung finden als basische oder kationische Farbstoffe, Beizen-, Direkt-, Dispersions-, Entwicklungs-, Küpen-, Metallkomplex-, Reaktiv-, Säure-, Schwefel-, Kupplungs- oder Substantive Farbstoffe.

Als koloristisch inerte Füllstoffe sind alle Stoffe/Verbindungen zu verstehen, die einerseits koloristisch unwirksam sind; d.h. die eine geringe Eigenabsorption zeigen und deren Brechzahl ähnlich der Brechzahl des Beschichtungsmediums ist, und die andererseits in der Lage sind, die Orientierung (parallele Ausrichtung) der Effektpigmente in der Oberflächenbeschichtung, d.h. im applizierten Lackfilm, zu beeinflussen, ferner Eigenschaften der Beschichtung oder der Beschichtungsmassen, beispielsweise UV-Beständigkeit, Härte oder Rheologie. Im folgenden sind beispielhaft einsetzbare inerte Stoffe/Verbindungen genannt, ohne jedoch den Begriff koloristisch inerte topologiebeeinflussende Füllstoffe auf diese Beispiele zu beschränken.

Geeignete inerte Füllstoffe entsprechend der Definition können beispielsweise transparente oder semitransparente Füllstoffe oder Pigmente sein, wie z.B. Kieselgele, Blancfixe, Kieselgur, Talkum, Calciumcarbonate, Kaolin, Bariumsulfat, Magnesiumsilikat, Aluminiumsilikat, kristallines Siliziumdioxid, amorphe Kieselsäure, Diamant, Granat, Bimsstein, Tripel, Siliciumcarbid, Schmirgel, Aluminiumoxide, wie beispielsweise Korund (α-Aluminiumoxid), Kieselgur, Sand (Schleifsande), Gips, Borcarbid, Boride, Carbide, Nitride, Zirkondioxid oder CeroxidMikrokugeln oder Mikrohohlkugeln z.B. aus Glas, Keramik oder Polymeren mit Größen von beispielsweise 0,1-50 µm. Weiterhin können als inerte Füllstoffe beliebige feste inerte organische Partikel, wie z.B. Harnstoff-Formaldehyd-Kondensationsprodukte, mikronisiertes Polyolefinwachs und mikronisiertes Amidwachs, eingesetzt werden. Die inerten Füllstoffe können jeweils auch in Mischung eingesetzt werden. Bevorzugt wird jedoch jeweils nur ein Füllstoff eingesetzt.

Geeignete UV-Schutzpigmente sind solche, die die sie umgebende sowie darunter liegenden Schichten vor strahlungsinduziertem Abbau durch UV-Strahlung schützen. Beispiele dafür sind Zinkoxid oder Titandioxid.

Zusätzlich kann die Beschichtungsmasse mindestens ein Lichtschutzmittel enthalten. Hierbei kann es sich um mindestens einen Radikalfänger und/oder mindestens einen UV-Absorber handeln. Mit UV-Absorbern sind solche Verbindungen bezeichnet, die elektromagnetische Strahlung im Wellenlängenbereich von 280 bis 440 nm absorbieren und zumeist durch strahlungslose Desaktivierung in Wärme umwandeln.

Dabei kann es sich beispielsweise um 2-(2-Hydroxyphenyl)-2H-benzotriazole, Hydroxybenzophenone, (2-Hydroxyphenyl)-s-triazine, Oxalanilide handeln. Bevorzugte UV-Stabilisatoren sind wiedergegeben in WO 2004/46234, S. 3, Z. 36 bis S. 6, Z. 3, auf die hiermit vollständig Bezug genommen sei.

Beispiele für Lichtschutzmittel sind Radikalfänger, wie beispielsweise sterisch gehinderte Amine.

Die erfindungsgemäßen Beschichtungsmassen sind beispielsweise wie folgt zusammengesetzt:
(A) 20 - 80 Gew%, bevorzugt 30 bis 80, besonders bevorzugt 40 bis 75 und ganz besonders bevorzugt 50 bis 70 Gew%,
(B) 0 bis 25 Gew%, bevorzugt 0 bis 20, besonders bevorzugt 0 bis 15 und ganz besonders bevorzugt 0 bis 10 Gew%,
(C) 20 - 80 Gew%, bevorzugt 20 bis 70, besonders bevorzugt 25 bis 60 und ganz besonders bevorzugt 30 bis 50 Gew%,
(D) 0 bis 25 Gew%, bevorzugt 0 bis 20, besonders bevorzugt 0 bis 15 und ganz besonders bevorzugt 0 bis 10 Gew%,
(E) 0,1 bis 5 Gew%, bevorzugt 0,2 bis 5, besonders bevorzugt 0,3 bis 4 und ganz besonders bevorzugt 0,5 bis 3 Gew%,
(F) 0 bis 50 Gew%, bevorzugt 5 bis 50, besonders bevorzugt 10 bis 40 und ganz besonders bevorzugt 20 bis 30 Gew%,
   mit der Maßgabe, daß die Summe immer 100 Gew% beträgt.

Die Beschichtung der Substrate mit den erfindungsgemäßen Beschichtungsmassen erfolgt nach üblichen, dem Fachmann bekannten Verfahren, wobei man eine erfindungsgemäße Beschichtungsmasse oder eine solche enthaltend Lackformulierung auf das zu beschichtende Substrat in der gewünschten Stärke aufbringt und gegebenenfalls trocknet. Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Coextrudieren erfolgen. Die Beschichtungsstärke liegt in der Regel in einem Bereich von etwa 3 bis 1000 g/m² und vorzugsweise 10 bis 200 g/m².

Weiterhin wird ein Verfahren zum Beschichten von Substraten offenbart, bei dem man eine erfindungsgemäßen Beschichtungsmasse oder eine solche enthaltende Lackformulierung, gegebenenfalls mit weiteren lacktypischen Additiven und thermisch, chemisch oder strahlungshärtbaren Harzen versetzt, auf das Substrat aufbringt und gegebenenfalls trocknet, mit Elektronenstrahlen oder UV Belichtung unter sauerstoffhaltiger Atmosphäre oder bevorzugt unter Inertgas härtet, gegebenenfalls bei Temperaturen bis zur Höhe der Trocknungstemperatur und anschließend bei Temperaturen bis zu 120°C, bevorzugt zwischen 60 und 120 °C, besonders bevorzugt zwischen 80 und 120 °C, thermisch behandelt.

Die Strahlungshärtung erfolgt mit energiereichem Licht, z.B. UV-Licht oder Elektronenstrahlen, bevorzugt UV-Licht. Die Strahlungshärtung kann bei höheren Temperaturen erfolgen, bevorzugt bei Temperaturen bis zu 120 °C, besonders bevorzugt bis zu 100 °C. Die Temperatur sollte dabei mindestens Raumtemperatur (23 °C) betragen.

Strahlungshärtung heißt hier die radikalische Polymerisation von polymerisierbaren Verbindungen infolge einer elektromagnetischen und/oder korpuskularen Strahlung, bevorzugt UV-Licht im Wellenlängenbereich von λ=200 bis 700 nm und/oder Elektronenstrahlung im Bereich von 150 bis 300 keV und besonders bevorzugt mit einer Strahlungsdosis von mindestens 80, bevorzugt 80 bis 3000 mJ/cm².

Gegebenenfalls kann, wenn mehrere Schichten des Beschichtungsmittels übereinander aufgetragen werden, nach jedem Beschichtungsvorgang eine Trocknung und/oder Strahlungshärtung erfolgen.

Als Strahlungsquellen für die Strahlungshärtung geeignet sind z.B. Quecksilber-Niederdruckstrahler, -Mitteldruckstrahler mit Hochdruckstrahler sowie Leuchtstoffröhren, Impulsstrahler, Metallhalogenidstrahler, Elektronenblitzeinrichtungen, wodurch eine Strahlungshärtung ohne Photoinitiator möglich ist, oder Excimerstrahler. Die Strahlungshärtung erfolgt durch Einwirkung energiereicher Strahlung, also UV-Strahlung oder Tageslicht, vorzugsweise Licht im Wellenlängenbereich von λ=200 bis 700 nm strahlt, besonders bevorzugt von λ=200 bis 500 nm und ganz besonders bevorzugt λ=250 bis 400 nm, oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3000 mJ/cm².

Selbstverständlich sind auch mehrere Strahlungsquellen für die Härtung einsetzbar, z.B. zwei bis vier.

Diese können auch in jeweils unterschiedlichen Wellenlängebereichen strahlen.

Die Trocknung und/oder thermische Behandlung kann auch zusätzlich zur oder anstelle der thermischen Behandlung durch NIR-Strahlung erfolgen, wobei als NIR-Strahlung hier elektromagnetische Strahlung im Wellenlängenbereich von 760 nm bis 2,5 µm, bevorzugt von 900 bis 1500 nm bezeichnet ist.

Die Bestrahlung kann gegebenenfalls auch unter Ausschluß von Sauerstoff, z. B. unter Inertgas-Atmosphäre, durchgeführt werden. Als Inertgase eignen sich vorzugsweise Stickstoff, Edelgase, Kohlendioxid, oder Verbrennungsgase. Des weiteren kann die Bestrahlung erfolgen, indem die Beschichtungsmasse mit transparenten Medien abgedeckt wird. Transparente Medien sind z. B. Kunststofffolien, Glas oder Flüssigkeiten, z.B. Wasser. Besonders bevorzugt ist eine Bestrahlung in der Weise, wie sie in der DE-A1 199 57 900 beschrieben ist.

Die erfindungsgemäßen Beschichtungsmassen können verwendet werden zur Beschichtung von verschiedenen Substraten, wie z. B. Holz, Holzfurnier, Papier, Pappe, Karton, Textil, Leder, Vlies, Kunststoffoberflächen, Glas, Keramik, mineralische Baustoffe, Metalle oder beschichtete Metalle.

Insbesondere ist der Einsatz der Beschichtungsmassen in Grundierungen, Füllern, pigmentierten Decklacken und Klarlacken im Bereich Autoreparatur- oder Großfahrzeuglackierung bevorzugt. Besonders geeignet sind solche Beschichtungsmassen für Anwendungen, in denen eine besonders hohe Applikationssicherheit, Außenwitterungsbeständigkeit, Optik, Lösemittel-, Chemikalien- und Wasserfestigkeit gefordert werden, wie in der Autoreparatur- und Großfahrzeuglackierung.

Besonders eignen sie sich als Grundierungen, Füller, pigmentierte Decklacke und Klarlacke im Bereich Industrie-, Holz-, Auto-, insbesondere OEM- Lackierung, oder Dekolackierung eingesetzt werden. Ganz besonders geeignet sind die Beschichtungsmittel für Anwendungen, in denen eine besonders hohe Applikationssicherheit, Außenwitterungsbeständigkeit, Optik, Kratzbeständigkeit, Lösemittel- und/oder Chemikalienbeständigkeit gefordert wird.

### Beispiele

Die in den Beispiel angegeben Viskosität wurde gemessen nach DIN 53019 Teil 1 in einem ICI-Kegel-Platte Viskosimeters bei 23 °C und einem Schergefälle von 100 s⁻¹.

### Beispiel A

Ein Epoxidacrylat mit der mittleren Molmasse 520 g/mol (Umsetzungsprodukt von Acrylsäure mit Bisphenol-A-diglycidylether (EPA 520)) wurde mit Adipinsäuredivinylester (ADVE) in fünf verschiedenen Konzentrationen gemischt (Beispiele A.1-A.5). In der Tabelle sind die Viskositäten angegeben. Als Vergleich wurde EPA 520 mit Hexandioldiacrylat (HDDA) auch in fünf verschiedenen Konzentrationen gemischt (Beispiele A.6-A.10), um den Verdünnungseffekt gegenüber den Adipinsäuredivinylester zu untersuchen.

Die Herstellung der strahlungshärtbaren Masse erfolgte durch intensive Mischung von 100 Gewichtsteilen des unter Beispiel A erhaltenen Epoxidacrylats mit 4 Gewichtsteilen 1-Hydroxy-cyclohexyl-phenylketon (handelsüblicher Photoinitiator Irgacure® 184 der Firma Ciba Spezialitätenchemie).

| | Beispiel A | Gew% EPA 520 | Gew% ADVE | Viskosität [mPa.s] |
|---|---|---|---|---|
| EPA 520 in ADVE | A.1 | 100 | 0 | 1950 |
| | A.2 | 90 | 10 | 90 |
| | A.3 | 80 | 20 | 6,9 |
| | A.4 | 70 | 30 | 1,0 |
| | A.5 | 60 | 40 | 0,9 |
| EPA 520 in HDDA Vergleich | A.6 | 100 | 0 | 1950 |
| | A.7 | 90 | 10 | 128 |
| | A.8 | 80 | 20 | 17 |
| | A.9 | 70 | 30 | 2,1 |
| | A.10 | 60 | 40 | 0,3 |

### Beispiel B

Ein polyfunktionelles Urethanacrylat UA1 wurde analog Beispiel 7 der EP 903363 A1 hergestellt, mit dem Unterschied, daß es anstelle von Hexandioldiacrylat mit Adipinsäuredivinylester (ADVE) in fünf verschiedenen Konzentrationen gelöst wurde (Beispiele B.1-B.5). In der Tabelle sind die Viskositäten angegeben. Als Vergleich wurde das gleiche Urethanacrylat UA1 mit Hexandioldiacrylat (HDDA) in fünf verschiedenen Konzentrationen hergestellt (Beispiele B.6-B.10), um den Verdünnungseffekt gegenüber den Adipinsäuredivinylester zu untersuchen.

Die Herstellung der strahlungshärtbaren Masse erfolgte durch intensive Mischung von 100 Gewichtsteilen des unter Beispiel B erhaltenen Urethanacrylats, mit 4 Gewichtsteilen 1-Hydroxy-cyclohexyl-phenylketon (handelsüblicher Photoinitiator Irgacure® 184 der Firma Ciba Spezialitätenchemie).

| | Beispiel B | Gew% UA1 | Gew% ADVE | Viskosität [mPa.s] |
|---|---|---|---|---|
| UA1 in ADVE | B.1 | 100 | 0 | 500000 |
| | B.2 | 90 | 10 | 87040 |
| | B.3 | 80 | 20 | 14560 |
| | B.4 | 70 | 30 | 2840 |
| | B.5 | 60 | 40 | 720 |
| UA1 in HDDA Vergleich | B.6 | 100 | 0 | 500000 |
| | B.7 | 90 | 10 | 158720 |
| | B.8 | 80 | 20 | 25600 |
| | B.9 | 70 | 30 | 6080 |
| | B.10 | 60 | 40 | 1560 |

### Beispiel C

Ein handelsübliches Gemisch eines ungesättigten Polyesteracrylats und Epoxidacrylats (Laromer® LR 8800 der Firma BASF AG, Ludwigshafen) wurde mit Adipinsäuredivinylester (ADVE) in fünf verschiedenen Konzentrationen gemischt (Beispiele C.1-C.5). In der Tabelle sind die Viskositäten angegeben. Als Vergleich wurde Laromer® LR 8800 mit Hexandioldiacrylat (HDDA) auch in fünf verschiedenen Konzentrationen gemischt (Beispiele C.6-C.10), um den Verdünnungseffekt gegenüber den Adipinsäuredivinylester zu untersuchen.

Die Herstellung der strahlungshärtbaren Masse erfolgte durch intensive Mischung von 100 Gewichtsteilen des unter Beispiel C erhaltenen Polyesteracrylats mit 4 Gewichtsteilen 1-Hydroxy-cyclohexyl-phenylketon (handelsüblicher Photoinitiator Irgacure® 184 der Firma Ciba Spezialitätenchemie).

| | Beispiel C | Gew% LR 8800 | Gew% ADVE | Viskosität [mPa.s] |
|---|---|---|---|---|
| LR 8800 in ADVE | C.1 | 100 | 0 | 6400 |
| | C.2 | 90 | 10 | 1720 |
| | C.3 | 80 | 20 | 620 |
| | C.4 | 70 | 30 | 250 |
| | C.5 | 60 | 40 | 110 |
| LR 8800 in HDDA Vergleich | C.6 | 100 | 0 | 6400 |
| | C.7 | 90 | 10 | 1760 |
| | C.8 | 80 | 20 | 800 |
| | C.9 | 70 | 30 | 350 |
| | C.10 | 60 | 40 | 150 |

### Beispiel D

Ein handelsübliches Gemisch eines Polyesteracrylats und Epoxidacrylats (Laromer® PE 44F der Firm BASF AG, Ludwigshafen) wurde mit Adipinsäuredivinylester (ADVE) in fünf verschiedenen Konzentrationen gemischt (Beispiele D.1-D.5). In der Tabelle sind die Viskositäten angegeben. Als Vergleich wurde Laromer® PE 44F mit Hexandioldiacrylat (HDDA) auch in fünf verschiedenen Konzentrationen gemischt (Beispiele D.6-D.10), um den Verdünnungseffekt gegenüber den Adipinsäuredivinylester zu untersuchen.

Die Herstellung der strahlungshärtbaren Masse erfolgte durch intensive Mischung von 100 Gewichtsteilen des unter Beispiel D erhaltenen Polyesteracrylats, mit 4 Gewichtsteilen 1-Hydroxy-cyclohexyl-phenylketon (handelsüblicher Photoinitiator Irgacure® 184 der Firma Ciba Spezialitätenchemie).

| | Beispiel D | Gew% PE 44F | Gew% ADVE | Viskosität [mPa.s] |
|---|---|---|---|---|
| PE 44F in ADVE | D.1 | 100 | 0 | 3520 |
| | D.2 | 90 | 10 | 1200 |
| | D.3 | 80 | 20 | 460 |
| | D.4 | 70 | 30 | 200 |
| | D.5 | 60 | 40 | 100 |
| PE 44F in HDDA Vergleich | D.6 | 100 | 0 | 3520 |
| | D.7 | 90 | 10 | 1280 |
| | D.8 | 80 | 20 | 640 |
| | D.9 | 70 | 30 | 330 |
| | D.10 | 60 | 40 | 160 |

### Beispiel E

Ein oktafunktionelles Urethanacrylat UA2 analog Beispiel 1 der WO 2006/069690 wurde mit Adipinsäuredivinylester (ADVE) in fünf verschiedenen Konzentrationen gemischt (Beispiele E.1-E.5). In der Tabelle sind die Viskositäten angegeben. Als Vergleich wurde UA2 mit Hexandioldiacrylat (HDDA) auch in fünf verschiedenen Konzentrationen gemischt (Beispiele E.6-E.10), um den Verdünnungseffekt gegenüber den Adipinsäuredivinylester zu untersuchen.

Die Herstellung der strahlungshärtbaren Masse erfolgte durch intensive Mischung von 100 Gewichtsteilen des unter Beispiel E erhaltenen oktafunktionellen Urethanacrylats UA2, mit 4 Gewichtsteilen 1-Hydroxy-cyclohexyl-phenylketon (handelsüblicher Photoinitiator Irgacure® 184 der Firma Ciba Spezialitätenchemie).

| | Beispiel E | Gew% UA2 | Gew% ADVE | Viskosität [mPa.s] |
|---|---|---|---|---|
| UA2 in ADVE | E.1 | 100 | 0 | 224000 |
| | E.2 | 90 | 10 | 23700 |
| | E.3 | 80 | 20 | 9000 |
| | E.4 | 70 | 30 | 1600 |
| | E.5 | 60 | 40 | 400 |
| UA2 in HDDA Vergleich | E.6 | 100 | 0 | 224000 |
| | E.7 | 90 | 10 | 33200 |
| | E.8 | 80 | 20 | 11200 |
| | E.9 | 70 | 30 | 3000 |
| | E.10 | 60 | 40 | 800 |

### Anwendungsbeispiele

Bestimmung der anwendungstechnischen Eigenschaften Pendeldämpfung und Erichsen Tiefung der Acrylate und Vinylester nach UV Härtung.

Die Bestimmung der Pendeldämpfung erfolgte analog DIN 53157. Hierzu wurden die strahlungshärtbaren Zusammensetzungen mit einer Nassfilmdicke von 400 µm auf Glas aufgebracht. Die Nassfilme wurden zunächst 15 Minuten bei Raumtemperatur abgelüftet und anschließend 20 Minuten bei 100°C getrocknet. Die Aushärtung der auf diese Weise erhaltenen Filme erfolgte an einer IST Beschichtungsanlage (Typ M 40 2x1-R-IR-SLC-So inert) mit 2 UV-Strahlern (Quecksilberhochdrucklampen Typ M 400 U2H und Typ M 400 U2HC) und einer Förderbandgeschwindigkeit von 10 m/min unter Stickstoffatmosphäre (Gehalt an Sauerstoff nicht mehr als 500 ppm). Die Strahlendosis betrug ca. 1900 mJ/cm².

Die Ermittlung der Erichsen-Tiefung erfolgte analog DIN 53156. Hierzu wurde mittels eines Kastenrakels die jeweilige erfindungsgemäße Zubereitung mit einer Nassfilmdicke von 200 µm auf BONDER-Blech 132 aufgebracht. Zur Aushärtung wurde in der oben beschriebenen Weise belichtet. Anschließend wurde die Erichsen-Tiefung durch Eindrücken einer Metallkugel in die nicht beschichtete Seite des Blechs bestimmt. Hohe Werte bedeuten hohe Flexibilität.

| Beispiel | Pendeldämpfung [s] | | Erichsen-Tiefung [mm] | |
|---|---|---|---|---|
| Härtungs-temperatur | 23 °C | 100°C | 23 °C | 100°C |
| A.4 | 151 | 169 | 1,2 | 3 |
| A.9 (Vgl) | 192 | 199 | 0,7 | 2,2 |
| B.4 | 142 | 155 | 3,5 | 4,9 |
| B.9 (Vgl) | 97 | 161 | 5 | 4,5 |
| C.4 | 95 | 155 | 2,7 | 3,9 |
| C.9 (Vgl) | 111 | 137 | 2,6 | 3,6 |
| D.4 | 39 | 78 | 4,1 | 2,2 |
| D.9 (Vgl) | 71 | 85 | 4,1 | 3,1 |
| E.4 | 160 | 158 | 0,8 | 0,5 |
| E.9 (Vgl) | 158 | 167 | 0,8 | nicht meßbar |

## Patentansprüche

1. Strahlungshärtbare Beschichtungsmassen, enthaltend
(A) mindestens eine Verbindung mit mindestens zwei (Meth)acrylatgruppen, die ausgewählt ist aus der Gruppe bestehend aus Polyester(meth)acrylat, Polyether(meth)acrylat, Polycarbonat(meth)acrylat, Epoxid(meth)acrylat und Urethan(meth)acrylat,
(B) gegebenenfalls mindestens eine Verbindung mit mindestens einer ethyle nisch ungesättigten Gruppe, die eine andere als (A) ist,
(C) Adipinsäuredivinylester,
(D) gegebenenfalls mindestens ein Lösungsmittel,
(E) mindestens einen Photoinitiator und
(F) gegebenenfalls weitere lacktypische Bestandteile,
**dadurch gekennzeichnet, daß** der Anteil des Adipinsäuredivinylester (C) an der Summe der strahlungshärtbaren Bestandteile (A) + (B) + (C) mindestens 20 Gew% beträgt, wobei es sich bei dem Epoxid(meth)acrylat um das Umsetzungsprodukt von (Meth)acrylsäure mit Bisphenol-A-diglycidylether, Bisphenol-F-diglycidylether, 1,4-Butandioldiglycidether, 1,6-Hexandioldiglycidylether, Trimethylolpropantriglycidylether, Pentaerythrittetraglycidylether, 1,1,2,2-tetrakis[4-(2,3-epoxypropoxy)phenyl]ethan (CAS-Nr. [27043-37-4]), Diglycidylether von Polypropylenglykol (α,ω-bis(2,3-epoxypropoxy)poly(oxypropylen) (CAS-Nr. [16096-30-3]) oder von hydriertem Bisphenol A (2,2-bis[4-(2,3-epoxypropoxy)cyclohexyl]propan, CAS-Nr. [13410-58-7]) handelt.

2. Beschichtungsmasse gemäß Anspruch 1, **dadurch gekennzeichnet, daß** die Urethan(meth)acrylate aufgebaut sind aus
(a) mindestens einem organischen aliphatischen, aromatischen oder cycloa liphatischen Di- oder Polyisocyanat,
(b) mindestens einer Verbindung mit mindestens einer gegenüber Isocyanat reaktiven Gruppe und mindestens einer (Meth)acrylatgruppe und
(c) gegebenenfalls mindestens einer Verbindung mit mindestens zwei gegen über Isocyanat reaktiven Gruppen.

3. Beschichtungsmasse gemäß Anspruch 2, **dadurch gekennzeichnet, daß** das Diisocyanat ausgewählt ist aus der Gruppe bestehend aus 1-Isocyanato-3,3,5-trimethyl-5-(isocyanatomethyl)cyclohexan (Isophorondiisocyanat), 1,6-Diisocyanatohexan. 4,4'-Di(isocyanatocyclohexyl)methan und 3 (bzw. 4), 8 (bzw. 9)-Bis(isocyanatomethyl)-tricyclo[5.2.1.02.6]decan-Isomerengemischen.

4. Beschichtungsmasse gemäß Anspruch 2, **dadurch gekennzeichnet, daß** es sich ' bei dem Polyisocyanat um ein isocyanurat- und/oder allophanat- und/oder biuretgruppenhaitige Polyisocyanat handelt.

5. Beschichtungsmasse gemäß einem der Ansprüche 2 bis 4, **dadurch gekennzeichnet, daß** die Verbindung (b) ausgewählt ist aus der Gruppe bestehend aus 2-Hydroxy-ethylacrylat, 2-Hydroxyethylmethacrylat, 2- Hydroxypropylacrylat und 3-Hydroxypropylacrylat.

6. Beschichtungsmasse gemäß Anspruch 1, **dadurch gekennzeichnet, daß** es sich bei dem Polyester(meth)acrylat um ein (meth)acryliertes Polyesterpolyol handelt, das durch Umsetzung von zweiwertigen Alkoholen mit zweiwertigen Carbonsäuren erhältlich ist.

7. Beschichtungsmasse gemäß Anspruch 1, **dadurch gekennzeichnet, daß** es sich bei dem Polyether(meth)acrylat um ein vollständig (meth)acryliertes, alkoxylierte Polyol der Formeln (la) bis (Id) 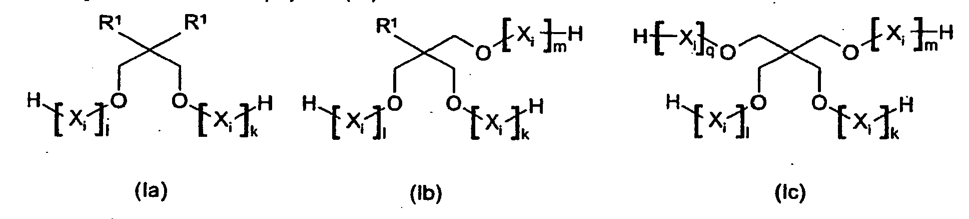 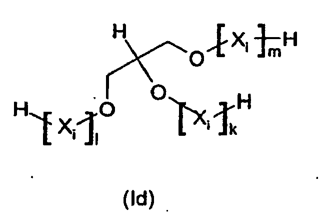 handelt, worin
R1 und R2 unabhängig voneinander Wasserstoff oder gegebenenfalls durch Aryl, Alkyl, Aryloxy, Alkyloxy, Heteroatome und/oder Heterocyclen substituiertes C1 - C18-Alkyl,
k, I, m, q unabhängig voneinander je für eine ganze Zahl von 1 bis 10, bevorzugt
1 bis 5 und besonders bevorzugt 1 bis 3 steht und
jedes Xi für i = 1 bis k, 1 bis I, 1 bis m und 1 bis q unabhängig voneinander ausgewählt sein kann aus der Gruppe -CH2-CH2-O-, -CH2-CH(CH3)-O-, - CH(CH3)-CH2-O-, -CH2-C(CH3)2-O-, -C(CH3)2-CH2-O-, -CH2-CHVin-O-,-CHVin-CH2-O-, -CH2-CHPh-O- und -CHPh-CH2-O-, bevorzugt aus der Gruppe -CH2-CH2-O-, -CH2-CH(CH3)-O- und -CH(CH3)-CH2-O-, und besonders bevorzugt -CH2-CH2-O-;
worin Ph für Phenyl und Vin für Vinyl steht.

## Claims

1. A radiation-curable coating composition comprising
(A) at least one compound having at least two (meth)acrylate groups which is selected from the group consisting of polyester (meth)acrylate, polyether (meth)acrylate, polycarbonate (meth)acrylate, epoxide (meth)acrylate, and urethane (meth)acrylate,
(B) if appropriate, at least one compound having at least one ethylenically unsaturated group, different than (A),
(C) divinyl adipate,
(D) if appropriate, at least one solvent,
(E) at least one photoinitiator, and
(F) if appropriate, further typical coatings ingredients,
wherein the fraction of divinyl adipate (C) as a proportion of the total of the radiation-curable ingredients (A) + (B) + (C) is at least 20% by weight, the epoxide (meth)acrylate being the reaction product of (meth)acrylic acid with bisphenol A diglycidyl ether, bisphenol F diglycidyl ether, 1,4-butanediol diglycidyl ether, 1,6-hexanediol diglycidyl ether, trimethylolpropane triglycidyl ether, pentaerythritol tetraglycidyl ether, 1,1,2,2-tetrakis[4-(2,3-epoxypropoxy)phenyl]ethane (CAS No. [27043-37-4]), diglycidyl ether of polypropylene glycol (α,ω-bis(2,3-epoxypropoxy)poly(oxypropylene) (CAS No. [16096-30-3]) or of hydrogenated bisphenol A (2,2-bis[4-(2,3-epoxypropoxy)cyclohexyl]propane, CAS No. [13410-58-7]).

2. The coating composition according to claim 1, wherein the urethane (meth)acrylates are synthesized from
(a) at least one organic aliphatic, aromatic or cycloaliphatic di- or polyisocyanate,
(b) at least one compound having at least one isocyanate-reactive group and at least one (meth)acrylate group, and
(c) if appropriate, at least one compound having at least two isocyanate-reactive groups.

3. The coating composition according to claim 2, wherein the diisocyanate is selected from the group consisting of 1-isocyanato-3,3,5-trimethyl-5-(isocyanatomethyl)cyclohexane (isophorone diisocyanate), 1,6-diisocyanatohexane, 4,4'-di(isocyanatocyclohexyl)methane, and 3(or 4), 8(or 9)-bis(isocyanatomethyl)tricyclo[5.2.1.0^{2,6}]decane isomer mixtures.

4. The coating composition according to claim 2, wherein the polyisocyanate is a polyisocyanate containing isocyanurate and/or allophanate and/or biuret groups.

5. The coating composition according to any one of claims 2 to 4, wherein the compound (b) is selected from the group consisting of 2-hydroxyethyl acrylate, 2-hydroxyethyl methacrylate, 2-hydroxypropyl acrylate, and 3-hydroxypropyl acrylate.

6. The coating composition according to claim 1, wherein the polyester (meth)acrylate is a (meth)acrylated polyesterpolyol which is obtainable by reacting dihydric alcohols with dibasic carboxylic acids.

7. The coating composition according to claim 1, wherein the polyether (meth)acrylate is a completely (meth)acrylated, alkoxylated polyol of the formulae (Ia) to (Id) 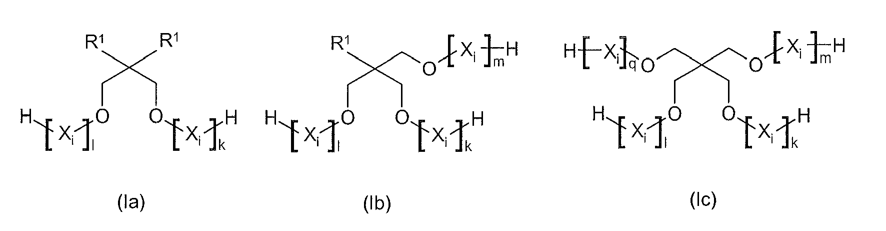 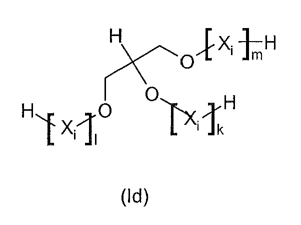 in which
R¹ and R² independently of one another are hydrogen or unsubstituted or aryl-, alkyl-, aryloxy-, alkyloxy-, heteroatom- and/or heterocycle-substituted C₁ - C₁₈ alkyl,
k, 1, m, and q independently of one another are each an integer from 1 to 10, preferably 1 to 5, and more preferably 1 to 3, and
each Xᵢ for i = 1 to k, 1 to 1, 1 to m, and 1 to q may be selected, independently of any other, from the group -CH₂-CH₂-O-, -CH₂-CH(CH₃)-O-,-CH(CH₃)-CH₂-O-, -CH₂-C(CH₃)₂-O-, -C (CH₃) ₂-CH₂-O-, -CH₂-CHVin-O-, -CHVin-CH₂-O-, -CH₂-CHPh-O-, and -CHPh-CH₂-O-, preferably from the group -CH₂-CH₂-O-, -CH₂-CH(CH₃)-O-, and -CH(CH₃)-CH₂-O-, and more preferably -CH₂-CH₂-O-,
in which Ph is phenyl and Vin is vinyl.

## Revendications

1. Matières de revêtement durcissables par irradiation, contenant
(A) au moins un composé comportant au moins deux groupes (méth)acrylate, qui est choisi dans l'ensemble constitué par un polyester(méth)acrylate, un polyéther(méth)acrylate, un polycarbonate(méth)acrylate, un époxyde(méth)acrylate et un uréthanne(méth)acrylate,
(B) éventuellement au moins un composé comportant au moins un groupe à insaturation éthylénique, qui est différent de (A),
(C) l'adipate de divinyle,
(D) éventuellement au moins un solvant,
(E) au moins un photoamorceur et
(F) éventuellement d'autres composants caractéristiques pour les peintures,
**caractérisées en ce que** la proportion de l'adipate de divinyle (C) par rapport à la somme des composants durcissables par irradiation (A) + (B) + (C) est d'au moins 20 % en poids, l'époxyde(méth)acrylate consistant en le produit de réaction d'acide (méth)acrylique avec l'éther diglycidylique de bisphénol A, l'éther diglycidylique de bisphénol F, l'éther diglycidylique de 1,4-butanediol, l'éther diglycidylique de 1,6-hexanediol, l'éther triglycidylique de triméthylolpropane, l'éther tétraglycidylique de pentaérythritol, le 1,1,2,2-tétrakis[4-(2,3-époxypropoxy)phényl]éthane (n° CAS [27043-37-4]), l'éther diglycidylique de polypropylèneglycol [α,ω-bis(2,3-époxypropoxy)poly(oxypropylène)] (n° CAS [16096-30-3]) ou de bisphénol A hydrogéné (2,2-bis[4-(2,3-époxypropoxy)cyclohexyl]propane, n° CAS [13410-58-7]).

2. Matière de revêtement selon la revendication 1, **caractérisée en ce que** les uréthanne(méth)acrylates sont constitués
(a) d'au moins un di- ou polyisocyanate organique aliphatique, aromatique ou cycloaliphatique,
(b) d'au moins un composé comportant au moins un groupe réactif vis-à-vis d'un isocyanate et au moins un groupe (méth)acrylate et
(c) éventuellement d'au moins un composé comportant au moins deux groupes réactifs vis-à-vis d'un isocyanate.

3. Matière de revêtement selon la revendication 2, **caractérisée en ce que** le diisocyanate est choisi dans le groupe constitué par le 1-isocyanato-3,3,5-triméthyl-5-(isocyanatométhyl)cyclohexane (isophorone-diisocyanate), le 1,6-diisocyanatohexane, le 4,4'-di(isocyanatocyclohexyl)méthane et des mélanges d'isomères 3 (ou 4), 8 (ou 9)-bis(isocyanatométhyl)-tricyclo[5.2 .1.0^{2,6}]décane.

4. Matière de revêtement selon la revendication 2, **caractérisée en ce que** le polyisocyanate consiste en un polyisocyanate contenant des groupes isocyanurate et/ou allophanate et/ou biuret.

5. Matière de revêtement selon l'une quelconque des revendications 2 à 4, **caractérisée en ce que** le composé (b) est choisi dans le groupe constitué par l'acrylate de 2-hydroxyéthyle, le méthacrylate de 2-hydroxyéthyle, l'acrylate de 2-hydroxypropyle et l'acrylate de 3-hydroxypropyle.

6. Matière de revêtement selon la revendication 1, **caractérisée en ce que** le polyester(méth)acrylate consiste en un polyesterpolyol (méth)acryloylé qui peut être obtenu par mise en réaction d'alcools dihydriques avec des acides dicarboxyliques.

7. Matière de revêtement selon la revendication 1, **caractérisée en ce que** le polyéther(méth)acrylate consiste en un polyol alcoxylé totalement (méth)acryloylé de formules (Ia) à (Id) 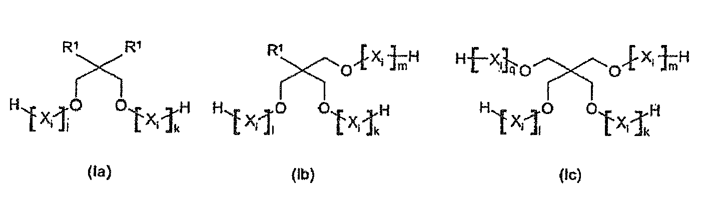 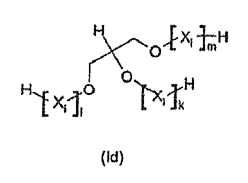 dans lesquelles
R¹ et R² représentent, indépendamment l'un de l'autre, un atome d'hydrogène ou un groupe alkyle en C₁-C₁₈ éventuellement substitué par aryle, alkyle, aryloxy, alcoxy, des hétéroatomes et/ou des hétérocycles,
k, 1, m, q représentent chacun, indépendamment les uns des autres, un nombre entier allant de 1 à 10, de préférence de 1 à 5 et de façon particulièrement préférée de 1 à 3 et
chaque Xᵢ pour i = 1 à k, 1 à 1, 1 à m et 1 à q, peut être choisi, chaque fois indépendamment, dans l'ensemble constitué par -CH₂-CH₂-O-,
- CH₂-CH(CH₃)-O-, -CH(CH₃)-CH₂-O-, -CH₂-C(CH₃)₂-O-,
- C (CH₃) ₂-CH₂-O-, -CH₂-CHVin-O-, -CHVin-CH₂-O-,
- CH₂-CHPh-O- et -CHPh-CH₂-O-, de préférence dans l'ensemble constitué par -CH₂-CH₂-O-,
- CH₂-CH(CH₃)-O- et -CH(CH₃)-CH₂-O-, et de façon particulièrement préférée est -CH₂CH₂-O- ;
Ph représentant le groupe phényle et Vin représentant le groupe vinyle.
